# DEMANDE DE BREVET EUROPEEN

(11) **EP 3 933 722 A1**
(43) Date de publication de la demande: **05.01.2022**
(21) Numéro de dépôt: 21305919.9
(22) Date de dépôt: 01.07.2021
(51) Int. Cl.: G06Q 10/00, G06Q 30/06

(54) **PROCÉDÉ ET SYSTÈME DE DIAGNOSTIC AUTOMATIQUE DE L'ÉTAT D'UNE FLOTTE DE VÉHICULES**

(30) Priorité: 01.07.2020 FR 2006969
(71) Demandeur: Birota, 92170 Vanves (FR)
(72) Inventeur: PHILIPPE, Charles, 92140 CLAMART (FR); LE RODALLEC, Arnaud, 75006 PARIS (FR)
(74) Mandataire: Ipside

(57) **Abrégé**

L'invention concerne un procédé de détection automatique d'un état d'un véhicule compris dans une flotte de véhicules similaires ou identiques, chaque véhicule comprenant un jeu de capteurs embarqués et un système de transmission sans fil des données du capteur à destination d'un serveur distant.

## Description

### DOMAINE TECHNIQUE DE L'INVENTION

Le domaine de l'invention est celui du suivi d'une flotte de véhicules.

Plus précisément, l'invention concerne un procédé et un système de diagnostic automatique de l'état d'une flotte de véhicules.

L'invention trouve notamment des applications pour la gestion d'une flotte de véhicules à propulsion humaine, tels que des bicyclettes ou des trottinettes, comprenant éventuellement une assistance électrique à la propulsion. La flotte peut être du type partagée, déployée sans stations (pouvant être appelée en « free floating ») et/ou avec des stations installées dans une pluralité d'endroits d'un territoire, les stations étant dotées d'au moins une borne connectant chacune un ou plusieurs véhicules afin par exemple de recharger des batteries incluses dans les véhicules.

### ÉTAT DE LA TECHNIQUE

Il est connu de l'art antérieur des techniques de gestion de l'état d'une flotte de véhicules où les véhicules sont régulièrement ramenés à un atelier de maintenance afin de les contrôler et les remettre en état.

Des outils de diagnostic ont été développés afin de pouvoir suivre à distance l'état des véhicules et déterminer si une action de maintenance doit être engagée ou non.

L'inconvénient majeur des techniques existantes est qu'elles sont souvent restreintes à un état interne du véhicule, et souvent liées à la spécificité de chaque véhicule, ce qui peut rendre l'interprétation des mesures délicate car liées à la configuration de chaque véhicule. Une valeur mesurée peut indiquer une défaillance pour un véhicule alors qu'elle peut être considérée comme une mesure correcte pour un autre véhicule.

Aucun des systèmes actuels ne permet de répondre simultanément à tous les besoins requis, à savoir de proposer une technique de suivi d'une flotte de véhicules qui permettent de diagnostiquer automatiquement un état anormal d'un véhicule afin de pouvoir le récupérer au plus vite pour le remettre en état, après l'avoir éventuellement retiré du système de partage, ou de contribuer à une amélioration de l'expérience utilisateur en proposant une meilleure planification de trajet ou une personnalisation de l'assistance électrique à la propulsion.

### EXPOSÉ DE L'INVENTION

La présente invention vise à remédier à tout ou partie des inconvénients de l'état de la technique cités ci-dessus.

À cet effet, l'invention vise un procédé de détection automatique d'un état d'un véhicule compris dans une flotte de véhicules similaires ou identiques, chaque véhicule comprenant un jeu de capteurs embarqués et un dispositif de transmission sans fil des données du jeu de capteurs à destination d'un serveur distant.

Selon l'invention, le procédé comprend des étapes de :
- collecte d'un jeu de données horodatées de tout ou partie des capteurs provenant de tout ou partie des véhicules par le serveur distant ;
- génération d'une valeur représentative d'un état associé à tout ou partie des véhicules de la flotte grâce à une analyse des données par une méthode d'apprentissage automatique préalablement entraîné sur une base de données comprenant des jeux de données des capteurs enregistrés au cours d'utilisation préalable des véhicules de la flotte, chaque jeu de données de la base de données étant associés à un état du véhicule associé ;
- génération d'une alerte lorsque la valeur d'état associé à un véhicule est distincte d'une plage de valeurs d'état associées à un fonctionnement normal d'un véhicule.

Il convient de souligner que la méthode d'apprentissage automatique permet de définir une signature d'un fonctionnement normal d'un véhicule de la flotte, en utilisant avantageusement le fait que la flotte est composée principalement de véhicules identiques, voire similaires.

Ainsi, il est possible de diagnostiquer automatiquement l'état d'un véhicule, et notamment lorsque l'état d'au moins une partie du véhicule est anormal, comme par exemple un défaut dans le freinage dû à un patin de frein usé, une roue voilée, un frottement anormal dans les roulements.

L'état associé à un véhicule peut correspondre à un état interne du véhicule, pour détecter par exemple un dysfonctionnement d'une pièce du véhicule, ou à un état externe au véhicule comme par exemple l'état de la route sur laquelle circule le véhicule, la présence de danger à proximité immédiate tel que l'angle mort d'un autre véhicule de type poids lourd ou bus.

L'état associé à un véhicule peut également correspondre à un état d'un utilisateur du véhicule, comme une pulsation cardiaque ou une présence d'un ou plusieurs utilisateurs à proximité du véhicule.

Dans des modes de mise en œuvre particulier de l'invention, le procédé comprend également avant l'étape d'analyse, une étape d'enrichissement des données collectées par des informations provenant d'un utilisateur du véhicule ou d'un technicien de maintenance du véhicule.

Ces informations peuvent comprendre une géolocalisation du véhicule avec la route associée.

L'invention vise également un dispositif de diagnostic automatique comprenant un processeur et une mémoire informatique stockant les instructions d'un procédé selon l'un quelconque des modes de mise en œuvre précédents.

En d'autres termes, la présente invention vise un procédé de détection de l'état d'un véhicule à partir des données de capteurs embarqués dans ledit véhicule et l'utilisation d'un modèle d'analyse de données pré-entraîné sur un jeu de données constitué de l'ensemble des données d'une flotte de véhicules similaires ou identiques, à l'aide de techniques d'apprentissage par machine (« machine learning » en anglais).

Ce procédé est composé de quatre principales étapes.

La première étape consiste en la remontée de données brutes de capteurs embarqués dans un ensemble de véhicules disposant d'une fonction de connectivité vers une plateforme centralisée. Ainsi, il est possible de constituer un jeu de données associant à chaque véhicule un jeu de données de capteurs horodatés.

La seconde étape consiste en l'enrichissement de ce jeu de données avec des « metadonnées » précisant l'état d'un véhicule à un instant donné à partir de sources d'information externes, telles que des remontées utilisateurs ou des diagnostics réalisés par des équipes de techniciens. Ainsi, cette étape permet d'associer des données brutes de capteurs avec des données d'état du véhicule à un instant donné, ceci sur un grand nombre de véhicules et un grand nombre d'instants. Il est utile de noter que cet instant n'est pas forcément un instant ponctuel t mais peutêtre constitué d'une plage temporelle centrée autour d'un instant t.

La troisième étape consiste en l'entraînement sur le jeu de données précédemment constitué d'un modèle disposant en entrée de données brutes de capteurs d'un véhicule à un instant donné et en sortie de l'état du véhicule à ce même instant. Des techniques non limitatives de l'invention permettant de réaliser un tel entraînement sont des techniques d'apprentissage par machine (« machine learning » en anglais) telles que le partitionnement (« clustering » en anglais) ou l'utilisation de réseaux de neurones. La littérature précise de nombreuses techniques d'entraînement de modèles de ce type constitués de séries temporelles en entrée et d'un nombre défini d'options possibles en sortie. En d'autres termes, le modèle apprend, en capitalisation sur les données issues d'un ensemble de véhicules connectés, la signature physique constituée par les données brutes de capteurs caractéristique de chaque état du vélo. Ce modèle est donc capable d'identifier l'état d'un vélo à partir des descripteurs clés des données brutes de capteurs échantillonnées à l'instant considéré.

La dernière étape consiste à appliquer ledit modèle pré-entraîné aux données brutes de capteurs remontées par un véhicule à un instant donné à la plateforme centralisée, afin de déterminer l'état de ce véhicule à l'instant considéré. En d'autres termes, le modèle sait dire l'état d'un véhicule en analysant les données brutes de capteurs d'un véhicule à un instant donné, au regard de l'historique des données brutes de capteurs remontées par un ensemble de véhicules identiques ou similaires, ainsi que des états à différents instants d'exploitation desdits véhicules.

Un mode de réalisation alternatif de l'invention consiste à implémenter le modèle pré-entraîné directement dans l'informatique embarquée du véhicule afin que l'analyse d'état soit effectuée sur le véhicule et ainsi communiquer directement le résultat de cette analyse, à savoir l'état du vélo, à la plateforme centralisée. Ce mode de réalisation alternatif permet donc de réaliser la détection d'état de façon embarquée et automatisée dans le véhicule plutôt que de communiquer l'ensemble des données brutes de capteurs à la plateforme qui se charge alors de la détection à l'aide du modèle pré-entraîné. L'avantage de cette solution est qu'elle induit une dépendance plus faible au lien de connectivité entre le véhicule et la plateforme centralisée, ce qui peut par exemple permettre d'assurer un fonctionnement temps réel du système ou de remonter les données brutes de capteurs uniquement lorsque le lien de connectivité est dans des conditions optimales (moins cher, plus basse consommation...) afin de ne remonter que l'information d'état détecté (moins « lourde ») de manière continue ou temps réel.

Ledit dispositif de détection d'état d'un véhicule peut par exemple être utilisé afin de détecter l'état des freins dudit véhicule, ou bien l'état de gonflage des pneumatiques, ou encore l'état de la structure mécanique constituant ledit véhicule. Cette liste est non exhaustive et peut notamment être enrichie selon la taille du jeu de données de capteurs ou le nombre et le type de capteurs embarqués dans le véhicule.

Les capteurs embarqués peuvent avantageusement être des accéléromètres, gyroscopes, magnétomètres, capteurs de températures, microphones, capteurs piezoélectriques, capteurs de luminosité, capteurs de courant/tension, capteurs de couple etc...

Un capteur embarqué peut également être de type capteur de profondeur, radar ou LIDAR, appelé simplement radar par la suite, permettant de donner une indication d'une ou plusieurs distances d'éléments de l'environnement immédiat du véhicule, tel qu'un obstacle à proximité du véhicule ou la position d'un utilisateur du véhicule. Une estimation du niveau d'effort de l'utilisateur peut également être obtenue à partir des données d'un capteur embarqué de type radar, en mesurant par exemple les mouvements de la position de la cage thoracique relativement par rapport à l'individu, afin d'évaluer une fréquence de respiration ou un battement cardiaque.

Une caméra, par exemple du type infrarouge, peut également être associée au capteur embarqué de type radar afin d'améliorer l'estimation des positions et des états associés. Une analyse du visage, afin d'identifier une posture ou une émotion, peut par exemple être effectuée afin d'améliorer l'évaluation le niveau d'effort de l'utilisateur.

Il convient de souligner qu'il peut être intéressant de connaître le niveau d'effort de l'utilisateur afin d'ajuster, en temps réel, la puissance de l'assistance électrique. L'assistance électrique peut ainsi être renforcée lorsque le niveau d'effort de l'utilisateur est élevé afin de soulager l'utilisateur.

Dans des modes de mise en œuvre particuliers de l'invention, la valeur d'état associé à un véhicule comprend au moins une caractéristique d'un état interne audit véhicule.

Dans des modes de mise en œuvre particuliers de l'invention, la valeur d'état associé à un véhicule comprend au moins une caractéristique d'un état externe audit véhicule.

Dans des modes de mise en œuvre particuliers de l'invention, la valeur d'état associé à un véhicule comprend au moins une caractéristique d'un état d'un utilisateur dudit véhicule.

Dans des modes de mise en œuvre particuliers de l'invention, la valeur d'état associé à un véhicule comprend une évaluation d'un couple appliqué sur un pédalier du véhicule par un utilisateur dudit véhicule.

Un tel pédalier est notamment présent lorsque le véhicule est un cycle, plus précisément un vélo.

Dans des modes de mise en œuvre particuliers de l'invention, la valeur d'état associé à un véhicule comprend une évaluation d'un danger sur le trajet du véhicule.

Un danger est par exemple un angle mort d'un poids lourd ou d'un bus situé à proximité de véhicule.

Dans des modes de mise en œuvre particuliers de l'invention, le procédé de détection comprend également une étape d'ajustement d'une assistance électrique à la propulsion du véhicule en fonction de la valeur d'état associé au véhicule.

Dans des modes de mise en œuvre particuliers de l'invention, le procédé de détection comprend également une étape de génération d'un itinéraire entre deux points, tenant compte d'une cartographie des voies praticables, une valeur caractéristique de l'état de roulement de la voie ayant été associée à tout ou partie des voies praticables.

Dans des modes de mise en œuvre particuliers de l'invention, la valeur caractéristique de l'état de roulement de la voie est extraite d'une valeur d'état associé à un véhicule préalablement générée.

L'invention vise également un système de détection automatique d'un état associé à un véhicule compris dans une flotte de véhicules similaires ou identiques, comprenant un serveur comportant un processeur et une mémoire informatique stockant des instructions d'un procédé de détection selon l'une quelconque des revendications précédentes.

### BRÈVE DESCRIPTION DES FIGURES

D'autres avantages, buts et caractéristiques particulières de la présente invention ressortiront de la description non limitative qui suit d'au moins un mode de réalisation particulier des dispositifs et procédés objets de la présente invention, en regard des dessins annexés, dans lesquels :
- la figure 1 est une vue schématique d'un exemple de mode de réalisation d'un système de détection automatique d'un état associé à un véhicule compris dans une flotte ;

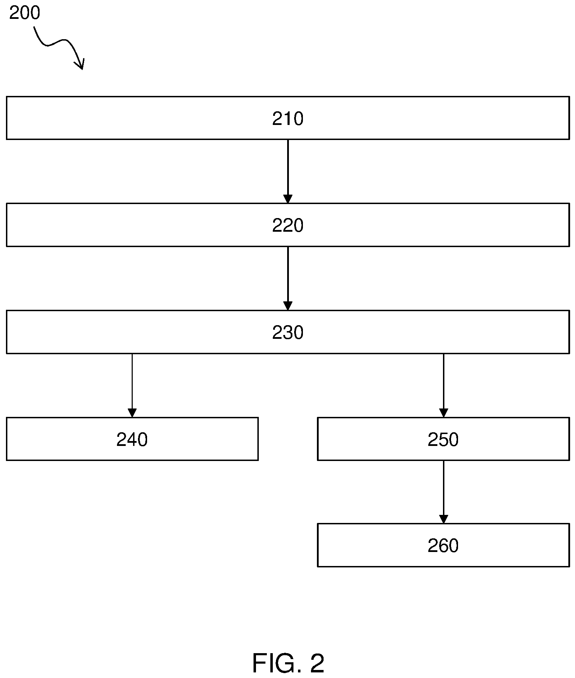

- la figure 2 est un schéma synoptique d'un exemple de mode de mise en œuvre d'un procédé de détection automatique d'un état associé à un véhicule compris dans une flotte.

### DESCRIPTION DÉTAILLÉE DE L'INVENTION

La présente description est donnée à titre non limitatif, chaque caractéristique d'un mode de réalisation pouvant être combinée à toute autre caractéristique de tout autre mode de réalisation de manière avantageuse.

On note, dès à présent, que les figures ne sont pas à l'échelle.

### Exemple d'un mode de réalisation particulier

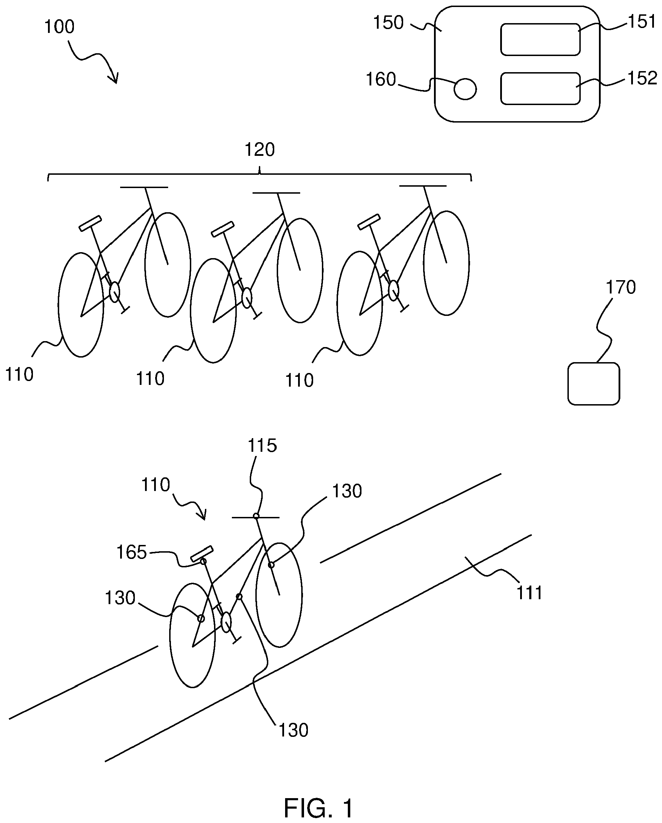

La figure 1 est une vue schématique d'un système 100 de détection automatique d'un état associé à un véhicule 110 compris dans une flotte 120 de véhicules similaires, le véhicule 110 circulant sur une voie 111. Dans le présent exemple non limitatif de l'invention, les véhicules 110 de la flotte 120 sont des vélos. Les véhicules de la flotte peuvent être d'autre types tels que des trottinettes. Les véhicules de la flotte 120 présentent ici une assistance électrique à la propulsion, correspondant ici à une assistance électrique au pédalage.

Avantageusement, les véhicules de la flotte 120 présentent majoritairement les mêmes pièces constitutives, notamment le cadre, les roues, le guidon, etc. avec éventuellement quelques différences au niveau de certaines pièces qui ont par exemple été remplacées par une pièce équivalente.

Les véhicules 110 de la flotte 120 comprennent avantageusement des capteurs 130 placés à différents endroits de chaque véhicule 110, permettant de mesurer différents types de données telles qu'une inclinaison, une vibration, un couple, une force, une tension de surface, une température, une intensité lumineuse, une distance, etc. Les capteurs 130 peuvent ainsi être de tout type comme par exemple un accéléromètre, un gyroscope, un capteur de couple, un capteur de force, un thermomètre, un capteur lumineux, une caméra, un radar, un capteur magnétique, un capteur de courant, etc.

Le système 100 comprend un serveur informatique 150 comprenant un processeur 151, une mémoire informatique 152 et des moyens 160 de collecte des données mesurées par les capteurs 130.

Les moyens 160 de collecte comprennent notamment une antenne permettant la réception d'une transmission de données effectuée de manière électromagnétique par un transmetteur de signaux 165 présent sur chaque véhicule. Les données peuvent avoir été prétraité par un processeur interne au véhicule afin de limiter les données transmises sans fil au serveur 150.

La transmission de données peut s'effectuer indépendamment en temps réel ou dans des périodes prédéterminées, par exemple par l'intermédiaire d'un réseau de télécommunication mobile par exemple de type 4G ou 5G. La transmission peut également s'effectuer lorsque le véhicule 110 est à proximité d'une balise 170 permettant de collecter des données avant de les retransmettre au serveur informatique 150. La balise 170 peut être plus précisément un téléphone portable intelligent, couramment appelé par le terme anglais de « smartphone ».

Les données mesurées peuvent avantageusement être horodatées et associées à une position du véhicule, obtenue par exemple par géolocalisation par un système satellitaire de type GPS (Global Positioning System) ou tout autres caractéristiques de fonctionnement du véhicule, comme une vitesse, une inclinaison par rapport à un plan horizontal (détection d'une montée ou d'une descente), etc. Des conditions extérieures peuvent également être prises en compte comme des conditions météorologiques, pour identifier si la voie 111 sur laquelle circule le véhicule 110 est potentiellement glissante ou non, liée à la pluie, à la présence potentielle de feuilles mortes, etc.

Les données des différents véhicules 110 sont ensuite analysées par un procédé 200 permettant d'associer un état à chaque véhicule 110 de la flotte 120. L'état peut par exemple comprendre une caractéristique d'un état interne du véhicule pour signaler par exemple une défaillance sur une pièce, par exemple un patin de freinage, un changement de vitesse ou une roue voilée ou sur une assistance électrique à la propulsion, telle qu'une assistance électrique au pédalage. Cette défaillance peut être actuelle ou à venir, en analysant les données des différents capteurs et de leur évolution dans le temps.

L'état associé à chaque véhicule peut également comprendre une caractéristique liée à un état externe du véhicule comme des obstacles à un bon roulement sur la voie 111 (présence de nid de poule, de dos d'âne ou de pavé), ou la présence d'un danger (par exemple angle mort d'un véhicule). Dans le cas de la détection d'angles morts, un ou plusieurs capteurs de type radar peuvent être utilisés afin d'évaluer le périmètre immédiat du véhicule, et détecter la présence d'un obstacle de taille imposante.

L'état associé à chaque véhicule 110 peut également comprendre une caractéristique liée à un état d'un individu soit utilisateur du véhicule soit à proximité du véhicule. Lorsque l'individu est utilisateur du véhicule 110, le système 100 peut avantageusement déterminer si l'individu rencontre des difficultés pour faire avancer le véhicule. Par exemple, l'individu peut peiner pour pédaler afin de faire avancer le vélo, notamment dans une phase de côte. A cet effet, un capteur 115 de type radar peut avantageusement être placé au niveau du guidon du vélo, ou de la potence, en regard de l'individu afin de mesurer la distance de la cage thoracique de l'individu au guidon et les mouvements relatifs de la cage thoracique par rapport à l'individu. La cage thoracique se trouve à une distance de l'ordre de trente à cinquante centimètres du capteur 115 de type radar, permettant d'avoir une estimation précise des mouvements de la cage thoracique, notamment au niveau de la fréquence de respiration de l'individu. Une fréquence de respiration trop importante par rapport à une moyenne signifie que l'individu est en train de peiner.

Pour détecter ces différents états, le procédé 200 comprend une première étape 210 de collecte par le serveur 150 de données horodatées provenant des véhicules 110 de la flotte 120. Il peut s'agir de données mesurées sur un intervalle de temps prédéterminé (par exemple une heure, une demi-journée, une journée ou une semaine), correspondant aux trajets effectués par chaque véhicule 110 de la flotte 120 pendant cet intervalle de temps.

Les données sont ensuite analysées afin d'identifier automatiquement des états inhabituels. Il convient de souligner que la flotte 120 comprenant avantageusement des véhicules identiques ou similaires, les données collectées sont en principe cohérentes dans des mêmes conditions de mesures. Par exemple, les vibrations mesurées au niveau du cadre sont similaires pour chaque véhicule 110 de la flotte 120 lorsque chaque véhicule 110 passe sur une route pavée à une vitesse similaire et un chargement similaire. Le chargement correspondant notamment au poids de l'individu utilisateur du véhicule et d'éventuels objets portés ou placés dans un porte-bagage du véhicule 110.

Grâce à un traitement automatisé par une méthode d'apprentissage automatique, par exemple de type réseau de neurones, effectuée au cours d'une deuxième étape 220 du procédé 200, il est ainsi possible d'identifier un état anormal sur un véhicule, comme par exemple une roue voilée, car dans les mêmes conditions la vibration mesurée sur un véhicule 110 ayant une roue voilée ou dégonflée est différente de la vibration mesurée sur un véhicule 110 ayant une roue non voilée ou gonflée à la bonne pression.

En combinant différentes informations des capteurs, il est ainsi possible de déterminer d'où vient précisément le défaut d'un véhicule 110 de la flotte 120.

En d'autres termes, la deuxième étape 220 permet de générer une valeur représentative d'un état associé à au moins un véhicule 110 de la flotte 120 grâce à une analyse des données collectées par la méthode d'apprentissage automatique.

La méthode d'apprentissage a à cet effet été préalablement entraînée sur une base de données comprenant des jeux de données des capteurs enregistrés au cours d'utilisation préalable des véhicules de la flotte, chaque jeu de données de la base de données étant associés à un état du véhicule associé, comprenant des conditions d'utilisations du véhicule.

Lorsque la valeur d'état associé à un véhicule est distincte d'une plage de valeurs d'état associés à un fonctionnement normal, par exemple supérieure à un seuil prédéterminé, une alerte est générée au cours d'une troisième étape 230.

Cette alerte peut déclencher une opération de maintenance d'un véhicule ou une adaptation de l'assistance électrique à la propulsion dans une quatrième étape 240, par exemple lorsqu'un couple de force inhabituel est détecté sur une des manivelles du pédalier du vélo ou lorsque l'utilisateur étant à la peine a besoin d'une assistance supplémentaire.

Il convient de souligner qu'une cartographie peut également être réalisée au cours d'une étape 250 du procédé 200, en typant les voies en fonction de leur qualité de roulement, telle que déduite de l'analyse par la méthode d'apprentissage automatique des données collectées par les capteurs 130 de chaque véhicule 110 de la flotte 120.

La qualité de roulement d'une voie telle qu'une route peut être estimée par exemple à partir des valeurs mesurées par les accéléromètres, permettant de déduire si la route est plutôt lisse ou si elle présente des aspérités importantes aptes à réduire la vitesse du véhicule 110. Si un grand nombre de véhicules 110 de la flotte relève des valeurs plus importantes que d'habitude dans une portion d'une voie, cela peut ainsi signifier que la qualité de roulement de cette portion de la voie est mauvaise, par exemple parce qu'elle est pavée et non goudronnée.

Une caractéristique liée à la présence de dangers sur une voie peut également être ajoutée à la cartographie afin de tenir compte

A partir de la cartographie établie, il est ainsi possible d'effectuer une recommandation d'itinéraire entre deux points au cours d'une étape 260 du procédé en prenant en compte les qualités de roulement obtenues par l'analyse effectuée par la méthode d'apprentissage automatique.

Afin d'améliorer les valeurs d'état obtenues par l'analyse effectuée par la méthode d'apprentissage automatique, les données de la base de données d'apprentissage peuvent être avantageusement typées avec des caractéristiques de chaque véhicule, comme par exemple la pression des pneus, la présence d'une roue voilée, une caractérisation de la déformation de la roue voilée, etc.

La méthode d'apprentissage peut alternativement ou en complément être configurée pour déterminer un état lié à un paramètre physiologique de l'individu utilisateur du véhicule. A cet effet, les données du capteur 115 de type radar, les données de mesure du couple appliqué au pédalier, peuvent être avantageusement utilisées pour déterminer un état physiologique de l'individu utilisateur, pour déterminer notamment pour personnaliser l'assistance électrique au pédalage.

L'autonomie du véhicule 110 peut également être réévaluée.

Un suivi de la santé cardiovasculaire de l'individu utilisateur peut être envisagé à partir des données collectées afin de lui présenter des progrès et des encouragements, voire des objectifs pour améliorer sa santé.

Il convient de souligner que les exemples d'application de la méthode d'apprentissage automatique présentée ici sont multiples, aussi bien dans un cadre de maintenance des véhicules, de planification de trajets, de l'indication de danger ou de suivi de la santé des utilisateurs.

De telles applications sont par exemple :
- détection d'une roue voilée, en utilisant notamment des capteurs de type accéléromètre ou gyroscope ;
- détection de l'état d'une voie comme une route, en utilisant notamment des capteurs de type accéléromètre ou gyroscope ;
- détection de l'état des freins, en utilisant notamment des capteurs de type accéléromètre ou gyroscope ;
- évaluation du couple appliqué par l'utilisateur en comparant notamment des données enregistrées sur une pluralité de capteurs par rapport aux valeurs précédemment mesurées. Il convient de souligner qu'il est possible d'évaluer le couple appliqué sur le pédalier en effectuant par exemple un bilan d'effort sur la roue arrière et en connaissant la force motrice appliquée par l'assistance électrique. La vitesse de la rotation de la roue peut notamment être prise en compte dans ce bilan ;
- détection de la santé cardiaque du cycliste, en utilisant notamment un capteur de type radar ;
- détection d'angles morts, en utilisant notamment un capteur de type radar.

Par ailleurs, la méthode d'apprentissage automatique analysant des données provenant de véhicules identiques ou quasiment identiques, les résultats obtenus sont plus représentatifs de l'état effectif du véhicule ou des voies utilisées, que si le traitement avait été effectué sur une flotte hétérogène de véhicules.

## Revendications

1. Procédé de détection automatique d'un état associé à un véhicule compris dans une flotte de véhicules similaires ou identiques, chaque véhicule comprenant un jeu de capteurs embarqués et un dispositif de transmission sans fil des données des capteurs à destination d'un serveur distant, **caractérisé en ce que** ledit procédé comprend des étapes de :
• collecte d'un jeu de données horodatées de tout ou partie des capteurs provenant de tout ou partie des véhicules par le serveur distant ;
• génération d'une valeur représentative d'un état associé à tout ou partie des véhicules de la flotte grâce à une analyse des données par une méthode d'apprentissage automatique préalablement entraînée sur une base de données comprenant des jeux de données des capteurs enregistrés au cours d'utilisation préalable des véhicules de la flotte, chaque jeu de données de la base de données étant associés à un état du véhicule associé ;
• génération d'une alerte lorsque la valeur d'état associé à un véhicule est distincte d'une plage de valeurs d'état associées à un fonctionnement normal, l'alerte permettant d'identifier ledit véhicule.

2. Procédé de détection selon la revendication 1, dans lequel la valeur d'état associé à un véhicule comprend au moins une caractéristique d'un état interne audit véhicule.

3. Procédé de détection selon l'une quelconque des revendications précédentes, dans lequel la valeur d'état associé à un véhicule comprend au moins une caractéristique d'un état externe audit véhicule.

4. Procédé de détection selon l'une quelconque des revendications précédentes, dans lequel la valeur d'état associé à un véhicule comprend au moins une caractéristique d'un état d'un utilisateur dudit véhicule.

5. Procédé de détection selon l'une quelconque des revendications précédentes, dans lequel la valeur d'état associé à un véhicule comprend une évaluation d'un couple appliqué sur un pédalier du véhicule par un utilisateur dudit véhicule.

6. Procédé de détection selon l'une quelconque des revendications précédentes, dans lequel la valeur d'état associé à un véhicule comprend une évaluation d'un danger sur le trajet du véhicule.

7. Procédé de détection selon l'une quelconque des revendications précédentes, comprenant également une étape d'ajustement d'une assistance électrique à la propulsion du véhicule en fonction de la valeur d'état associé au véhicule.

8. Procédé de détection selon l'une quelconque des revendications précédentes, comprenant également une étape de génération d'un itinéraire entre deux points, tenant compte d'une cartographie des voies praticables, une valeur caractéristique de l'état de roulement de la voie ayant été associée à tout ou partie des voies praticables.

9. Procédé de détection selon la revendication précédente, dans lequel la valeur caractéristique de l'état de roulement de la voie est extraite d'une valeur d'état associé à un véhicule préalablement générée.

10. Système de détection automatique d'un état associé à un véhicule compris dans une flotte de véhicules similaires ou identiques, comprenant un serveur comportant un processeur et une mémoire informatique stockant des instructions d'un procédé de détection selon l'une quelconque des revendications précédentes.
